# EUROPÄISCHE PATENTANMELDUNG

(11) **EP 1 600 753 A1**
(43) Veröffentlichungstag der Anmeldung: **30.11.2005**
(21) Anmeldenummer: 05405269.1
(22) Anmeldetag: 24.03.2005
(51) Int. Cl.: G01L 13/02

(54) **Differenzdrucksensor**

(30) Priorität: 26.05.2004 CH 9022004
(71) Anmelder: Fr. Sauter AG, 4016 Basel (CH)
(72) Erfinder: Hämmerle, Martin, 2744 Belprahon (CH)
(74) Vertreter: Bollhalder, Renato

(57) **Zusammenfassung**

Ein Differenzdrucksensor (1) umfasst ein Gehäuse, in welchem zwei Membranen (40) angeordnet sind, die jeweils zwei Druckkammern (70, 71, 72, 73) voneinander trennen. Das Gehäuse ist durch Einzelplatten (20, 21, 22, 23, 24, 25, 26) einer Multilayer-Leiterplatte gebildet. Durch eine solche Ausgestaltung des Gehäuses werden wesentliche Elemente des Differenzdrucksensors (1), wie beispielsweise die Membranen (40) und die Druckkammern (70, 71, 72, 73), in die Multilayer-Leiterplatte integriert und es entsteht eine äusserst kompakter und robuster Differenzdrucksensor (1).

## Beschreibung

Die Erfindung betrifft einen Differenzdrucksensor gemäss dem Oberbegriff des unabhängigen Patentanspruchs 1 sowie ein Verfahren zum Herstellen eines derartigen Differenzdrucksensors.

Solche Differenzdrucksensoren mit einem Gehäuse, in welchem eine Membrane angeordnet ist, die zwei Druckkammern voneinander trennt, können beispielsweise zur Bestimmung der Strömungsgeschwindigkeit eines gasförmigen Mediums oder eines flüssigen Mediums verwendet werden. Dabei wird die Druckdifferenz an zwei Punkten entlang der Strömungsrichtung gemessen und daraus unter Einbezug der Rahmenbedingungen, wie unter anderem die Strömungseigenschaften des Mediums, die Strömungsgeschwindigkeit berechnet. Die Druckdifferenz wird beispielsweise gemessen, indem eine Membrane des Differenzdrucksensors auf seiner einen Oberfläche mit dem Druck im Medium an einem der zwei Punkte beaufschlagt wird und auf seiner anderen Oberfläche mit dem Druck im Medium am anderen der zwei Punkte. Die so erzeugte Kraft auf die Membrane und/oder der Hub der Membrane wird bestimmt und daraus die Druckdifferenz berechnet.

Die US 2003/0110864 A1 und die DE 41 11 119 A1 zeigen Differenzdruckmesszellen aus dem Gebiet der Mikrotechnologie, welche aus mehrschichtigen Plattenkonstruktionen bestehen, die jedoch keine Multilayer-Leiterplatte bilden.

Aus der EP 0 774 651 A2 ist ein Differenzdrucksensor bekannt, bei dem in einem Gehäuse zwei Membranen parallel übereinander angeordnet sind, die jeweils zwei Druckkammern voneinander trennen. Über mehrere Zuströmkanäle kann ein Medium in die und aus den Druckkammern strömen und verschiedene Drücke in den verschiedenen Druckkammern aufbauen, wodurch die Membranen ausgelenkt werden. Die Auslenkung der Membranen ist ein Mass für die Differenz zwischen den Drücken in den beiden jeweils an eine der Membrane angrenzenden Druckkammern. Das Gehäuse umfasst eine obere und eine untere Abdeckung, die beispielsweise als Leiterplatten ausgestaltet sein können, und Seitenwände, die beispielsweise aus aufeinander angeordneten Ringen gebildet sein können, insbesondere aus aufeinander angeordneten metallischen Ringen. Zur Bestimmung der Auslenkungen der Membranen ist auf der Innenseite der oberen und der unteren Abdeckung des Gehäuses jeweils eine mit der zugehörigen Membrane in Wechselwirkung stehende Spule angeordnet, insbesondere jeweils eine Flachspule. Zum Einströmen bzw. Ausströmen des Mediums in die bzw. aus den Druckkammern sind an einer der Abdeckungen typischerweise mehrere Stutzen angeordnet, die mit den Zuströmkanälen verbunden sind. Durch die Bestimmung der Auslenkungen von zwei Membranen gleichzeitig können Messungenauigkeiten auf Grund der Gravitation und auf Grund schnell ändernder Temperaturen über einen geeigneten Druckaufbau in den einzelnen Druckkammern ausgeglichen werden.

Ist eine der Leiterplatten als Tragelement ausgestaltet, insbesondere die Leiterplatte der unteren Abdeckung, auf welchem auch noch andere Bestückungen angeordnet sein können, bilden das Gehäuse eines solchen Differenzdrucksensors und seine Stutzen eine verhältnismässig sperrige, von der tragenden Leiterplatte abstehende Einheit, was einen Einbau in einer spezifischen Einrichtung erschwert und die mechanische Beanspruchbarkeit der tragenden Leiterplatte als Ganzes vermindert.

Der vorliegenden Erfindung liegt daher die Aufgabe zu Grunde, einen Differenzdrucksensor vorzuschlagen, welcher möglichst robust, kompakt, möglichst sensitiv und einfach herstellbar ist.

Die Aufgabe wird erfindungsgemäss durch einen Differenzdrucksensor gelöst, wie er im unabhängigen Patentanspruch 1 definiert ist. Der unabhängige Patentanspruch 10 bezieht sich auf ein erfindungsgemässes Verfahren zum Herstellen eines solchen Differenzdrucksensors. Vorteilhafte Ausführungsvarianten ergeben sich aus den abhängigen Patentansprüchen.

Das Wesen der Erfindung besteht im Folgenden: Ein Differenzdrucksensor weist ein Gehäuse auf, in welchem mindestens eine Membrane angeordnet ist, die zwei Druckkammern voneinander trennt. Das Gehäuse ist durch Einzelplatten einer Multilayer-Leiterplatte gebildet.

Multilayer-Leiterplatten sind im Gebiet der Elektronik hinlänglich bekannt und in verschiedenen Standardwerken der Elektronik beschrieben. Z.B. ist dem Branchenführer Elektronik Fertigung; 11. Auflage 2002; Hans-Georg Simanowski; Eugen G. Lenze Verlag folgende Definition zu entnehmen: "Multilayer-Leiterplatten (Multilayer Board) sind Leiterplatten mit mehr als 2 Verbindungsebenen, die von Dielektrika untereinander getrennt sind, zur Realisierung höchster Anforderungen bei optimierter Verbindungsdichte." Unter Einzelplatten werden in der vorliegenden Beschreibung einzelnen Platten verstanden, die zusammen Multilayer-Leiterplatten bilden können, und umfassen beispielsweise Platten, die aus Glas-Epoxid hergestellt sind, und insbesondere Leiterplatten, wie auch sie im Gebiet der Elektronik hinlänglich bekannt und in verschiedenen Standardwerken der Elektronik beschrieben sind. Z.B. ist wiederum dem Branchenführer Elektronik Fertigung; 11. Auflage 2002; Hans-Georg Simanowski; Eugen G. Lenze Verlag folgende Definition zu entnehmen: "Die Leiterplatte ist ein Substratmaterial (Dielektrikum) auf dem metallische Leiter für eine elektrische Schaltung angebracht wurden bzw. der Verdrahtungsträger, der die Verdrahtungsstruktur (üblicherweise aus drucktechnisch hergestellten dünnen Kupferschichten - gedruckte Schaltungen) auf einem isolierenden Träger (Basismaterial) enthält und der Aufnahme der Bauelemente dient." Durch die erfindungsgemässe Ausgestaltung des Gehäuses werden wesentliche Elemente des Differenzdrucksensors, wie beispielsweise die mindestens eine Membrane und die Druckkammern, in die Multilayer-Leiterplatte integriert und es entsteht ein äusserst kompakter und robuster Differenzdrucksensor. Insbesondere wenn eine Multilayer-Leiterplatte als Tragelement ausgestaltet ist, welches auch noch andere Bestückungen aufweist, stehen keine grossen Elemente des Differenzdrucksensors von der Multilayer-Leiterplatte ab, was einen leichten Einbau in einer spezifischen Einrichtung ermöglicht. Die genaue Ausgestaltung der Druckkammern, der mindestens einen Membrane und der Auswertungsschaltung bleibt grundsätzlich frei, so dass sie auf den Anwendungszweck des Differenzdrucksensors hin optimierbar ist.

Vorzugsweise weist eine Einzelplatte der Multilayer-Leiterplatte eine durchgehende Öffnung auf und die Membrane ist so angeordnet, dass sie die Öffnung abdeckt. Die Öffnung in der Einzelplatte kann so eine der Druckkammern des Differenzdrucksensors bilden, die durch die Membrane abgedeckt ist.

In einer vorteilhaften Ausführungsvariante weisen zwei benachbarte Einzelplatten der Multilayer-Leiterplatte jeweils eine durchgehende Öffnung auf und ist die Membrane so angeordnet, dass sie die beiden Öffnungen trennt. Dadurch können auf einfache Weise die zwei zu der Membrane gehörigen Druckkammern in Form der beiden Öffnungen gebildet werden.

In einer weiteren bevorzugten Ausführungsvariante ist die Membrane in einer eine durchgehende Öffnung aufweisenden Einzelplatte angeordnet. Eine so angeordnete Membrane kann durch eine einzige Einzelplatte gehalten werden, so dass die Membrane und die Einzelplatte eine Einheit bilden. Bei der Herstellung der Multilayer-Leiterplatte kann diese Einheit frei an ihre Endposition des Differenzdrucksensors bewegt werden, was den Herstellungsprozess vereinfacht. Wenn ausserdem an eine solche Einzelplatte eine zweite Einzelplatte mit einer durch die Membrane abgedeckten durchgehende Öffnung anschliesst, können die beiden an die Membrane angrenzenden Druckkammern auf einfache Weise ungleich gross ausgestaltet sein. Dadurch vergrössert sich die maximal mögliche Auslenkung der Membrane in eine Richtung bei gleichbleibender kompakter Bauweise.

In einer vorteilhaften Ausführungsvariante ist die Membrane zwischen benachbarten jeweils eine durchgehende Öffnung aufweisenden Einzelplatten eingeklemmt. Damit können zwei symmetrische, durch die Membrane abgetrennte Druckkammern realisiert werden, was insbesondere in einer Anwendung vorteilhaft sein kann, in der eine Auslenkung der Membrane in beide Richtungen zu erwarten ist, beispielsweise wenn bei der Messung der Strömungsgeschwindigkeit eines flüssigen oder gasförmigen Mediums die Strömungsrichtung des Mediums in zwei entgegengesetzte Richtungen ändern kann.

Mit Vorteil weist eine Einzelplatte der Multilayer-Leiterplatte auf mindestens einer seiner beiden Oberflächen eine Abschirmbeschichtung auf. Bei einer geeigneten Anordnung solcher beschichteter Einzelplatten kann der Differenzdrucksensor vor unerwünschten elektromagnetischen Einflüssen geschützt werden.

Vorzugsweise weist der Differenzdrucksensor zwei zueinander parallel angeordnete Membranen auf, zwischen denen mindestens eine Einzelplatte der Multilayer-Leiterplatte angeordnet ist. Mit den zwei Membranen und den jeweils zwei Druckkammern wird durch einen geeigneten Aufbau von verschiedenen Drücken in den einzelnen Kammern eine verbesserte Druckdifferenzmessung ermöglicht. Durch die gewählte Anordnung kann der Differenzdrucksensor auch relativ kompakt gebaut werden.

Indem z.B. die einander zugewandten Seiten der beiden Membranen mit einem ersten Druck und die einander abgewandten Seiten der beiden Membranen mit einem zweiten Druck beaufschlagt werden, können Störungen der Druckdifferenzmessung, beispielsweise erzeugt durch eine Auslenkung der Membranen durch die Gravitation, Vibrationen oder durch sprunghafte Temperaturänderungen, ausgeglichen werden.

Mit Vorteil weist der Differenzdrucksensor Zuströmkanäle auf zum Beaufschlagen der einander zugewandten Seiten der beiden Membranen mit einem ersten Druck und der einander abgewandten Seiten der beiden Membranen mit einem zweiten Druck. Solche Zuströmkanäle ermöglichen einen einfachen selektiven Aufbau von verschiedenen Drücken in verschiedene Druckkammern.

Vorzugsweise weist der Differenzdrucksensor eine elektrische Schaltung zur Bestimmung der Auslenkung der Membrane oder der Membranen auf. Eine solche elektrische Schaltung ermöglicht ein sehr genaues, schnelles und einfaches Ermitteln der Druckdifferenz.

Ein weiterer Aspekt der Erfindung betriff ein Verfahren zum Herstellen eines erfindungsgemässen Differenzdrucksensors, bei welchem Einzelplatten entsprechend einer gewünschten Gehäuseform des Differenzdrucksensors vorgeformt werden, die Einzelplatten dann insgesamt mit mindestens einer Membrane bestückt werden und die Einzelplatten danach zu einer Multilayer-Leiterplatte fest verbunden werden. Ein solches Verfahren ermöglicht ein einfaches Herstellen eines erfindungsgemässen Differenzdrucksensors mit verschiedenen Apparaturen und Verfahrensschritten, wie sie in der herkömmlichen Produktion von Multilayer-Leiterplatten eingesetzt werden.

Vorzugsweise werden Verbindungsschichten entsprechend den vorgeformten Einzelplatten vorgeformt, alternierend die Einzelplatten und die Verbindungsschichten aufeinander angeordnet und die aufeinander angeordneten Einzelplatten und Verbindungsschichten so mit Druck und Wärme beaufschlagt, dass sie zu einer Multilayer-Leiterplatte verbunden werden. So wird ein sehr einfaches Herstellen eines erfindungsgemässen Differenzdrucksensors mit herkömmlichen Apparaturen und Verfahrensschritten ermöglicht.

Die mindestens eine Membrane des erfindungsgemässen Differenzdrucksensors kann verschiedene Ausführungsformen aufweisen. Vorzugsweise umfasst die Membrane einen elastischen, druckdichten Federbereich, in dem ein festerer Teller angeordnet ist. Der Federbereich kann aus Elastomermaterial bestehen, in das mindestens ein Federarm eingebettet ist.

Ein solcher Federarm bildet eine kompakte, integrierte Federkonstruktion in der Membrane selbst und sorgt für eine definiertere Federung. Eine auf die Membrane wirkende Druckdifferenz zwischen den beiden Membranoberflächen bewirkt eine Verformung des verhältnismässig weichen Federbereichs und einen Hub des Tellers. Mit dem Hub des Tellers geht eine Auslenkung des Federarms einher, der einerseits den Bereich des Hubs definiert und andererseits die Federrate der Membrane im Wesentlichen bestimmt. Die Federrate [N/m] entspricht der Kraft, die für eine bestimmte Auslenkung aufgewendet werden muss. Dementsprechend weisen "weiche" Federn kleine Federraten auf und "harte" Federn grosse auf.

Die Auslenkung des Federarms bzw. des Federtellers kann im erfindungsgemässen Differenzdrucksensor mit einer elektrischen Schaltung auf einfache Weise gemessen werden, beispielsweise induktiv oder optisch und insbesondere kapazitiv. Für eine kapazitive Messung bestehen der mindestens eine Federarm und der Teller vorzugsweise aus einem elektrisch leitenden Material. Die Membrane ist beispielsweise im Differenzdrucksensor neben einer Polplatte angeordnet und mit einer Spannung beaufschlagt. Eine Verformung der Membrane bewirkt eine Änderung der Kapazität, die auf bekannte Weise gemessen werden kann, beispielsweise über die durch die Kapazitätsänderung erzeugte Ladungsänderung. Dadurch ist der Hub der Membrane und die Auslenkung des Federarms bestimmt. Durch die Anordnung der Membrane zwischen zwei Polplatten entsteht ein Doppelkondensator, so dass die Bestimmung der Kapazität durch eine differentielle Messung wesentlich verbessert werden kann, da Messungenauigkeiten ausgeglichen werden können. Aus dieser über die Kapazitätsänderung bestimmten Auslenkung kann dann die an den beiden Membranoberflächen wirkende Druckdifferenz ermittelt werden.

Mit einer solchen Membrane kann der Differenzdrucksensor einfach konstruiert werden. Ausserdem ermöglicht sie eine kompakte Konstruktion eines Differenzdrucksensors für die Messung verhältnismässig kleiner Druckdifferenzen, beispielsweise solcher von weniger als 100 Pa und insbesondere solcher in einem Bereich von 5 - 10 Pa.

Vorzugsweise ist angrenzend an den Federbereich der Membrane ein festerer Rand angeordnet. Die Membrane kann mit dem Rand im Differenzdrucksensor gehalten werden, was den Einbau wesentlich vereinfacht und sicherstellt, dass die mechanische Spannung des Federbereichs nicht beeinträchtigt wird.

Der mindestens eine Federarm der Membrane verbindet mit Vorteil den Rand mit dem Teller. Dies hat bei Druckbeaufschlagung eine regelmässigere Federung zur Folge.

Vorzugsweise bestehen der mindestens eine Federarm der Membrane, der Rand und der Teller aus einem elektrisch leitenden Material. So können elektrische Signale direkt vom Teller über den Federarm in den Rand übertragen werden. Dies erleichtert die Messung der Auslenkung des Federarms, insbesondere eine kapazitive Messung.

Der mindestens eine Federarm der Membrane mündet bei einer vorteilhaften Aüsführungsvariante etwa tangential in den Rand und den Teller. Auf diese Weise kann ein Federbereich mit einer guten Federwirkung realisiert werden.

Vorzugsweise verläuft der mindestens eine Federarm der Membrane teilweise etwa parallel zum Rand. Ein solcher Federarm ist einfach herstellbar.

Der mindestens eine Federarm der Membrane weist mit Vorteil in dem Teil, in welchem er etwa parallel zum Rand verläuft, vom Rand und vom Teller etwa den gleichen Abstand auf, was eine einfachere Konstruktion der Membrane ermöglicht, insbesondere ein einfacheres Einbringen des Elastomermaterials.

Der Federbereich der Membrane weist vorzugsweise drei bis sieben Federarme auf. Mit drei bis sieben Federarmen kann, bei einer verhältnismässig einfachen Konstruktion, eine gute Federwirkung erreicht werden.

Bei einer vorteilhaften Ausführungsvariante der Membrane ist das Elastomermaterial mindestens teilweise wellenförmig angeordnet. Mit so angeordnetem Elastomermaterial kann die Federrate des Elastomermaterials im Vergleich zur Federrate des Federarms gering gehalten werden. Die Messung insbesondere kleiner Druckdifferenzen wird dadurch verbessert. Vorzugsweise ist die Federrate des Elastomermaterials im Federbereich um einen Faktor zehn tiefer als die Federrate des Federarms.

Das Elastomermaterial ist bei einer vorteilhaften Ausführungsvariante der Membrane vorgespannt. Mit vorgespanntem Elastomermaterial kann der Nullpunkt der Membrane, d.h. die Auslenkung der Membrane bei gleichem Druck oberhalb und unterhalb der Membrane, einfacher genau definiert werden.

Mit Vorteil weist der Teller der Membrane zur besseren Verbindung mit dem Elastomermaterial Löcher auf, in die das Elastomermaterial eingreift. Mit einem solchen Teller kann eine sichere Verbindung von Teller und Elastomermaterial ohne Verwendung eines zusätzlichen Haftvermittlers gewährleistet werden.

Vorzugsweise ist der Rand der Membrane mit mindestens einer Lasche versehen. Solche Laschen können einerseits als Hilfe beim Positionieren der Membrane in einer Einzelplatte der Multilayer-Leiterplatte des Differenzdrucksensors dienen und andererseits können Mittel zur Weiterleitung elektrischer Signale daran angeschlossen werden.

Im Folgenden wird der erfindungsgemässe Differenzdrucksensor unter Bezugnahme auf die beigefügten Zeichnungen anhand von Ausführungsbeispielen detaillierter beschrieben. Es zeigen:
- Fig. 1 -: einen Querschnitt durch ein erstes Ausführungsbeispiel eines erfindungsgemässen Differenzdrucksensors;
- Fig. 2 -: einen Querschnitt durch ein zweites Ausführungsbeispiel eines erfindungsgemässen Differenzdrucksensors;
- Fig. 3 -: einen Querschnitt durch ein drittes Ausführungsbeispiel eines erfindungsgemässen Differenzdrucksensors; und
- Fig. 4 -: einen Randbereich eines Querschnitts durch ein viertes Ausführungsbeispiel eines erfindungsgemässen Differenzdrucksensors.

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen" und "nach aussen" bezeichnen Richtungen hin zum oder weg vom geometrischen Mittelpunkt des Differenzdrucksensors sowie benannter Teile desselben. Die Terminologie umfasst die oben ausdrücklich erwähnten Wörter, Ableitungen von denselben und Wörter ähnlicher Bedeutung.

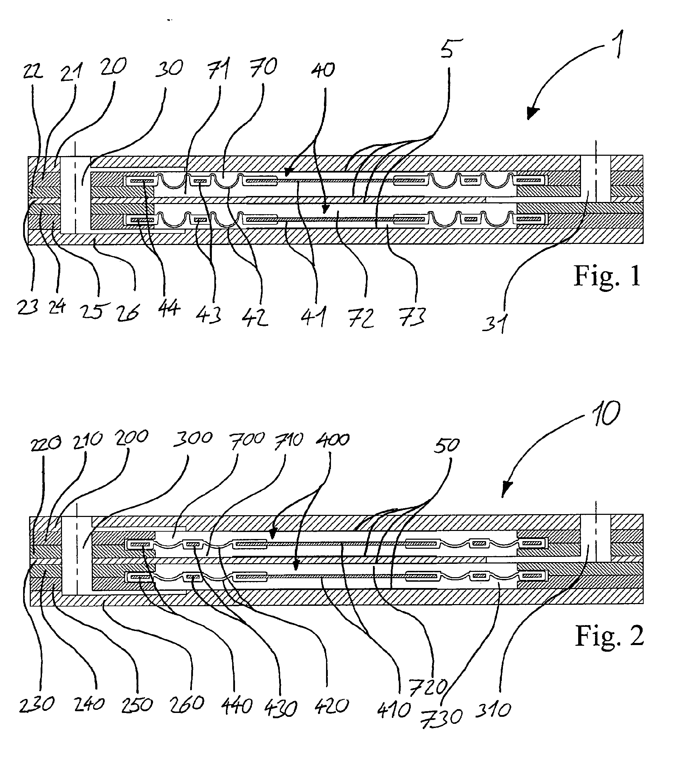

Fig. 1 zeigt ein erstes Ausführungsbeispiel eines erfindungsgemässen Differenzdrucksensors 1. Er umfasst ein Gehäuse aus sieben zu einer Multilayer-Leiterplatte verbundenen Einzelplatten 20, 21, 22, 23, 24, 25, 26. Eine oberste erste Einzelplatte 20 weist ein linkes durchgehendes Loch und ein rechtes durchgehendes Loch auf. Das linke Loch geht nach unten in eine in der Einzelplatte 20 nach innen verlaufende, nicht durchgehende Nut über. Zentral zwischen den beiden Löchern ist eine Polplatte 5 an einer Unterseite der ersten Einzelplatte 20 angeordnet.

Mit dieser Unterseite ist eine Oberseite einer zweiten Einzelplatte 21 fest verbunden. Die zweite Einzelplatte 21 umfasst ein linkes durchgehendes Loch und ein rechtes durchgehendes Loch, welche jeweils an das linke Loch bzw. an das rechte Loch der ersten Einzelplatte 20 anschliessen. Zentral zwischen den beiden Löchern weist die zweite Einzelplatte 21 eine durchgehende Öffnung auf, deren Durchmesser nach unten in einer Stufe so zunimmt, dass sich eine Abstufung am Rand der Öffnung ausbildet. In der Öffnung ist eine erste Membrane 40 so angeordnet, dass ein Rand 44 der Membrane 40 in der Abstufung liegt. Die Nut der ersten Einzelplatte 20 ist so ausgestaltet, dass sie die Öffnung der zweiten Einzelplatte 21 teilweise überragt.

Mit einer Unterseite der zweiten Einzelplatte 21 ist eine Oberseite einer dritten Einzelplatte 22 fest verbunden. Die dritte Einzelplatte 22 umfasst ein linkes durchgehendes Loch, ein rechtes durchgehendes Loch und eine durchgehende Öffnung, welche jeweils an das linke Loch bzw. an das rechte Loch bzw. an die Öffnung der zweiten Einzelplatte 21 anschliessen. Der Durchmesser der Öffnung der dritten Einzelplatte 22 entspricht dem oberen Durchmesser der Öffnung der zweiten Einzelplatte 21.

Mit einer Unterseite der dritten Einzelplatte 22 ist eine Oberseite einer vierten Einzelplatte 23 fest verbunden. Die vierte Einzelplatte 23 umfasst ein linkes durchgehendes Loch, welches an das linke Loch der dritten Einzelplatte 22 anschliesst, und einen rechten durchgehenden Spalt. Der Spalt schliesst an das rechte Loch der dritten Einzelplatte 22 an und erstreckt sich so nach innen, dass er die Öffnung der dritten Einzelplatte 22 teilweise überragt. Zentral unterhalb der ersten Membrane 40 ist an der Oberseite und einer Unterseite der vierten Einzelplatte 23 jeweils eine Polplatte 5 angeordnet.

Mit der Unterseite der vierten Einzelplatte 23 ist eine Oberseite einer fünften Einzelplatte 24 fest verbunden. Die fünfte Einzelplatte 24 umfasst ein linkes durchgehendes Loch, welches an das linke Loch der vierten Einzelplatte 23 anschliesst, und eine zentral angeordnete durchgehende Öffnung, deren Durchmesser dem Durchmesser der Öffnung der dritten Einzelplatte 22 entspricht.

Mit einer Unterseite der fünften Einzelplatte 24 ist eine Oberseite einer sechsten Einzelplatte 25 fest verbunden. Die sechste Einzelplatte 25 umfasst ein linkes durchgehendes Loch, welches an das linke Loch der fünften Einzelplatte 23 anschliesst, und eine zentral angeordnete durchgehende Öffnung, deren Durchmesser nach oben in einer Stufe so zunimmt, dass sich eine Abstufung am Rand der Öffnung ausbildet. Der Durchmesser der Öffnung an einer Unterseite der sechsten Einzelplatte 25 entspricht dem Durchmesser der Öffnung der fünften Einzelplatte 24. In der Öffnung ist eine zweite Membrane 40 so angeordnet, dass ein Rand 44 der Membrane 40 in der Abstufung liegt.

Mit der Unterseite der sechsten Einzelplatte 25 ist eine Oberseite einer siebten Einzelplatte 26 fest verbunden. Die siebte Einzelplatte 26 weist eine an das linke Loch der sechsten Einzelplatte 25 anschliessende nicht durchgehende Nut auf, die sich nach innen erstreckt und die Öffnung der sechsten Einzelplatte 25 teilweise überragt. Zentral unterhalb der zweiten Membrane 40 ist eine weitere Polplatte 5 auf der Oberseite der siebten Einzelplatte 26 angeordnet.

Die linken Löcher der ersten Einzelplatte 20, der zweiten Einzelplatte 21, der dritten Einzelplatte 22, der vierten Einzelplatte 23, der fünften Einzelplatte 24 und der sechsten Einzelplatte 25 bilden zusammen mit den Nuten der ersten Einzelplatte 20 und der siebten Einzelplatte 26 einen ersten nach aussen offenen Zuströmkanal 30. Die rechten Löcher der ersten Einzelplatte 20, der zweiten Einzelplatte 21 und der dritten Einzelplatte 22 bilden zusammen mit dem Spalt der vierten Einzelplatte 23 einen zweiten nach aussen offenen Zuströmkanal 31. Die Öffnung der zweiten Einzelplatte 21 bildet oberhalb der Membrane 40 eine erste Druckkammer 70, die Öffnung der dritten Einzelplatte 22 eine zweite Druckkammer 71, die Öffnung der fünften Einzelplatte 24 eine dritte Druckkammer 72 und die Öffnung der sechsten Einzelplatte 25 unterhalb der Membrane 40 eine vierte Druckkammer 73. Der erste Zuströmkanal 30 ist durchgehend mit der ersten Druckkammer 70 und der vierten Druckkammer 73 verbunden und der zweite Zuströmkanal 31 mit der zweiten Druckkammer 71 und der dritten Druckkammer 72.

Die beiden Membranen 40 umfassen jeweils einen scheibenförmigen Teller 41, den ringförmigen Rand 44 und einen zwischen Rand 44 und Teller 41 angeordneten Federbereich. Der Federbereich umfasst in Form eines Bogens ausgestaltete Dehnzonen 42 und zwei Federarme 43, welche den Teller 41 mit dem Rand 44 verbinden. (Die Verbindung ist in der Querschnittsansicht von Fig. 1 nicht ersichtlich.) Der Rand 44, der Teller 41 und der mindestens eine Federarm 43 sind typischerweise aus einem metallenen Material hergestellt. Die Dehnzonen 42 sind vorzugsweise aus einem elastomeren Material hergestellt, welches auch um den Rand 44, den mindestens einen Federarm 43 und den Randbereich des Teller 41 herum angeordnet ist.

Zur Messung einer Druckdifferenz befindet sich ein Medium, welches unter einem ersten Druck steht, im ersten Zuströmkanal 30 und der mit diesem verbundenen ersten Druckkammer 70 und vierten Druckkammer 73. Damit werden die einander abgewandten Oberflächen der beiden Membranen 40 mit dem ersten Druck beaufschlagt. Im zweiten Zuströmkanal 31 und in der mit diesem verbundenen zweiten Druckkammer 71 und dritten Druckkammer 72 befindet sich das gleiche oder ein anderes Medium, welches unter einem zweiten Druck steht. Damit werden die einander zugewandten Oberflächen der beiden Membranen 40 mit dem zweiten Druck beaufschlagt. Durch die Beaufschlagung der Membranen 40 mit jeweils zwei verschiedenen Drücken auf ihren beiden Oberflächen, werden die Teller 41 in Richtung der Druckkammer mit dem kleineren Druck gedrückt und gleichzeitig die Federarme 43 entsprechend ausgelenkt. Die beiden Membranen 40 werden also entweder in Richtung aufeinander zu oder in Richtung von einander weg ausgelenkt.

Die resultierende Auslenkung der Teller 41 bzw. der Federarme 43 kann durch eine geeignete Einrichtung des Differenzdrucksensors 1 gemessen werden, hier beispielsweise über eine elektrische Schaltung kapazitiv mit Hilfe der Polplatten 5 oder induktiv. Über die Auslenkung und die Federeigenschaften der Membranen 40 kann die Druckdifferenz bestimmt werden. Damit die Messung der Auslenkung eine möglichst gute Bestimmung der Druckdifferenz zulässt, sollten in den Federbereichen der Membranen 40 die Federraten der Dehnzonen 42 wesentlich kleiner sein als die Federraten der Federarme 43, beispielsweise um den Faktor zehn. Dies wird durch eine bogenförmige Ausgestaltung der Dehnzonen 42 begünstigt.

Dadurch, dass der Differenzdrucksensor 1 mit zwei Membranen 40 bestückt ist, die bei einer vorhandenen Druckdifferenz in den beiden Zuströmkanälen 30, 31 jeweils in entgegengesetzter Richtung ausgelenkt werden, lässt sich die Bestimmung der Druckdifferenz erheblich verbessern. Störende Einflüsse, wie z.B. eine geänderte Auslenkung durch eine Änderung der Umgebungstemperatur, z.B. die Wirkung von Vibrationen auf die Membranen oder z.B. die Wirkung der Gravitation auf die Membranen, können so auf einfache Weise ausgeglichen werden.

Indem die zweite Druckkammer 70 und die dritte Druckkammer 73 wesentlich höher ausgestaltet sind als die erste Druckkammer 71 und die vierte Druckkammer 72, sind die Membrane 40 nach innen weiter auslenkbar als nach aussen. Bei einer gegebenen Gesamthöhe der vier Druckkammern 70, 71, 72, 73 erlaubt dies den Einsatz von Membranen 40, die einen Federbereich mit einer verhältnismässig kleinen Federkonstanten aufweisen und damit zur genauen Bestimmung verhältnismässig kleiner Druckdifferenzen geeignet sind. Die kleine Federkonstante der Federbereiche der Membranen 40 wird durch eine verhältnismässig stark gebogene Form der Dehnzonen 42 erreicht.

Der in Fig. 1 dargestellte Differenzdrucksensor 1 ist also wegen der ungleich grossen ersten Druckkammer 70 bzw. vierten Druckkammer 73 im Vergleich zur zweiten Druckkammer 71 bzw. dritten Druckkammer 72 insbesondere für die Bestimmung von Druckdifferenzen geeignet, bei denen der erste Druck grösser ist als der zweite Druck. Bei der Anwendung des Differenzdrucksensors 1 zur Bestimmung der Strömungsgeschwindigkeit eines flüssigen oder gasförmigen Mediums verläuft die Strömungsrichtung demzufolge vorzugsweise von links nach rechts.

In Fig. 2 ist ein Differenzdrucksensor 10 mit sieben Einzelplatten 200, 210, 220, 230, 240, 250, 260 dargestellt, von welchen eine erste Leiterplatte 200, eine vierte Einzelplatte 230 und eine siebte Einzelplatte 260 genau wie die entsprechende erste Einzelplatte 20, die vierte Einzelplatte 23 und die siebte Einzelplatte 26 des in Fig. 1 gezeigten Differenzdrucksensors 1 ausgestaltet sind und Polplatten 50 aufweisen.

Mit einer Unterseite der erste Einzelplatte 200 ist eine Oberseite einer zweiten Einzelplatte 210 fest verbunden. Die zweite Einzelplatte 210 umfasst ein linkes durchgehendes Loch und ein rechtes durchgehendes Loch, welche jeweils an das linke Loch bzw. an das rechte Loch der ersten Einzelplatte 200 anschliessen. Zentral zwischen den beiden Löchern weist die zweite Einzelplatte 210 eine durchgehende Öffnung auf, deren Durchmesser nach unten in einer Stufe so zunimmt, dass sich eine Abstufung am Rand der Öffnung ausbildet.

Mit einer Unterseite der zweiten Einzelplatte 210 ist eine Oberseite einer dritten Einzelplatte 220 fest verbunden. Die dritte Einzelplatte 220 umfasst ein linkes durchgehendes Loch und ein rechtes durchgehendes Loch, welche jeweils an das linke Loch bzw. an das rechte Loch der zweiten Einzelplatte 210 anschliessen. Zentral zwischen den beiden Löchern weist die dritte Einzelplatte 220 eine an die Öffnung der zweiten Einzelplatte 210 anschliessende durchgehende Öffnung auf, deren Durchmesser nach oben in einer Stufe so abnimmt, dass sich eine Abstufung am Rand der Öffnung ausbildet. Der untere Durchmesser der Öffnung der dritten Einzelplatte 220 entspricht dem oberen Durchmesser der Öffnung der zweiten Einzelplatte 210.

In den Öffnungen der zweiten Einzelplatte 210 und der dritten Einzelplatte 220 ist eine erste Membrane 400 so angeordnet, dass ein Rand 440 der Membrane 400 in den Abstufungen der Öffnung der zweiten Einzelplatte 210 und der Öffnung der dritten Einzelplatte 220 eingeklemmt ist. Die Membrane 400 trennt die beiden Öffnungen voneinander.

Mit einer Unterseite der vierten Einzelplatte 230 ist eine Oberseite einer fünften Einzelplatte 240 fest verbunden. Die fünfte Einzelplatte 240 umfasst ein linkes durchgehendes Loch, welches an das linke Loch der vierten Einzelplatte 230 anschliesst. Zentral weist die fünfte Einzelplatte 240 eine durchgehende Öffnung auf, deren Durchmesser nach unten in einer Stufe so zunimmt, dass sich eine Abstufung am Rand der Öffnung ausbildet.

Mit einer Unterseite der fünften Einzelplatte 240 ist eine Oberseite einer sechsten Einzelplatte 250 fest verbunden. Die sechste Einzelplatte 250 umfasst ein linkes durchgehendes Loch, welches an das linke Loch der fünfte Einzelplatte 240 anschliesst. Unterhalb der Öffnung der fünften Einzelplatte 240 weist die sechste Einzelplatte 250 eine an die Öffnung der fünften Einzelplatte 240 anschliessende durchgehende Öffnung auf, deren Durchmesser nach oben in einer Stufe so abnimmt, dass sich eine Abstufung am Rand der Öffnung ausbildet. Der untere Durchmesser der Öffnung der sechsten Einzelplatte 250 entspricht dem oberen Durchmesser der Öffnung der fünften Einzelplatte 240.

In den Öffnungen der fünften Einzelplatte 240 und der sechsten Einzelplatte 250 ist eine zweite Membrane 400 so angeordnet, dass ein Rand 440 der Membrane 400 in den Abstufungen der Öffnung der fünften Einzelplatte 240 und der Öffnung der sechsten Einzelplatte 250 eingeklemmt ist. Die Membrane 400 trennt die beiden Öffnungen voneinander.

Die linken Löcher der ersten Einzelplatte 200, der zweiten Einzelplatte 210, der dritten Einzelplatte 220, der vierten Einzelplatte 230, der fünften Einzelplatte 240 und der sechsten Einzelplatte 250 bilden zusammen mit den Nuten der ersten Einzelplatte 200 und der siebten Einzelplatte 260 einen ersten nach aussen offenen Zuströmkanal 300. Die rechten Löcher der ersten Einzelplatte 200, der zweiten Einzelplatte 210 und der dritten Einzelplatte 220 bilden zusammen mit dem Spalt der vierten Einzelplatte 230 einen zweiten nach aussen offenen Zuströmkanal 310. Die Öffnung der zweiten Einzelplatte 210 bildet oberhalb der ersten Membrane 400 eine erste Druckkammer 700, die Öffnung der dritten Einzelplatte 220 unterhalb der ersten Membrane 400 eine zweite Druckkammer 710, die Öffnung der fünften Einzelplatte 240 oberhalb der zweiten Membrane 400 eine dritte Druckkammer 720 und die Öffnung der sechsten Einzelplatte 250 unterhalb der zweiten Membrane 400 eine vierte Druckkammer 730. Der erste Zuströmkanal 300 ist durchgehend mit der ersten Druckkammer 700 und der vierten Druckkammer 730 verbunden und der zweite Zuströmkanal 310 mit der zweiten Druckkammer 710 und der dritten Druckkammer 720.

Die beiden Membranen 400 umfassen jeweils einen scheibenförmigen Teller 410, den ringförmigen Rand 440 und einen zwischen Rand 440 und Teller 410 angeordneten Federbereich. Der Federbereich umfasst in Form eines verhältnismässig feinen Bogens ausgestaltete Dehnzonen 420 und zwei Federarme 430, welche den Teller 410 mit dem Rand 440 verbinden. (Die Verbindung ist in der Querschnittsansicht von Fig. 2 nicht ersichtlich.) Der Rand 440, der Teller 410 und die Federarme 430 sind typischerweise aus einem metallenen Material hergestellt. Die Dehnzonen 420 sind vorzugsweise aus einem elastomeren Material hergestellt, welches auch um den Rand 440, die Federarme 430 und den Randbereich des Tellers 410 herum angeordnet ist.

Dadurch, dass die Membranen 400 jeweils zwischen zwei benachbarten, symmetrischen Einzelplatten eingeklemmt sind, ergeben sich vier im wesentlichen gleich grosse Druckkammern 700, 710, 720, 730. Die Membranen sind somit nach oben und nach unten in gleichem Masse auslenkbar, wodurch der Differenzdrucksensor 10 sowohl für die Messung von Druckdifferenzen geeignet ist, bei welchen der erste Druck grösser ist als der zweite Druck, als auch für die Messung von Druckdifferenzen, bei welchen der zweite Druck grösser ist als der erste Druck. Bei einer Anwendung des Differenzdrucksensors 10 zur Bestimmung der Strömungsgeschwindigkeit eines gasförmigen oder flüssigen Mediums kann die Strömungsgeschwindigkeit sowohl von links nach rechts als auch von rechts nach links mit gleicher Genauigkeit bestimmt werden. Allerdings kann bei einer gegebenen Gesamthöhe der Druckkammern 700, 710, 720, 730 die Auslenkung der Membranen 400 weniger gross sein als bei dem in Fig. 1 gezeigten Ausführungsbeispiel.

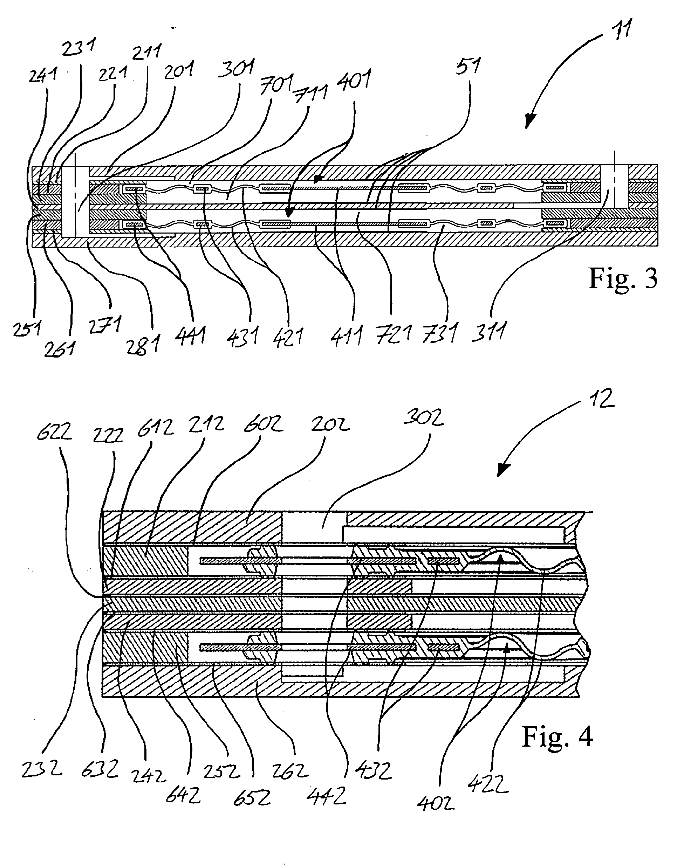

Der in der Fig. 3 gezeigte Differenzdrucksensor 11 umfasst vier Polplatten 51 und neun Einzelplatten 201, 211, 221, 231, 241, 251, 261, 271, 281, welche zwei Zuströmkanäle 301, 311 und zusammen mit zwei Membranen 401 vier Druckkammern 701, 711, 721, 731 bilden. Er entspricht vom Aufbau, der Funktionsweise und der bevorzugten Anwendungsart her grundsätzlich dem in Fig. 1 gezeigten Differenzdrucksensor 1. Anstelle der in Fig. 1 gezeigten Ausführungsform der gestuften Leiterplatte 21 und gestuften sechsten Leiteplatten 25 sind hier jedoch jeweils zwei Einzelplatten 221, 231 bzw. 261, 271 vorhanden, wobei die Membranen 401 jeweils in einer dickeren Einzelplatte 231, 261 angeordnet sind, die jeweils von einer nach aussen angrenzenden dünneren Einzelplatte 211, 271 nach innen teilweise überragt sind.

Die Membranen 401 umfassen entsprechend den Membranen 40 von Fig. 1 jeweils einen scheibenförmigen Teller 411, einen ringförmigen Rand 441 und einen zwischen Rand 441 und Teller 411 angeordneten Federbereich. Der Federbereich umfasst Dehnzonen 421 und zwei Federarme 43, welche den Teller 411 mit dem Rand 441 verbinden. (Die Verbindung ist in der Querschnittsansicht von Fig. 3 nicht ersichtlich.) Der Rand 441, der Teller 411 und die Federarme 431 sind typischerweise aus einem metallenen Material hergestellt. Die Dehnzonen 421 sind vorzugsweise aus einem elastomeren Material hergestellt, welches auch um den Rand 441, die Federarme 431 und den Randbereich des Tellers 411 herum angeordnet ist. Im Gegensatz zu den in der Fig. 1 gezeigten Membranen 40 sind die Dehnzonen 421 bei den in Fig. 3 gezeigten Membrane 401 in Form von zwei zusammen eine Welle bildenden Bögen ausgestaltet. Damit lässt sich eine entsprechend kleine Federkonstante der Dehnzonen 421 erreichen, ohne dass die Form eines sehr ausgeprägten Bogens aufweisen müssen. Dies erlaubt ein genaues Bestimmen verhältnismässig kleiner Druckdifferenzen bei einem in der Höhe kleineren Platzbedarf der gesamten Membrane 401.

Fig. 4 zeigt eine Ansicht eines Teils eines Differenzdrucksensors 12, bei der Verbindungsschichten 602, 612, 622, 632, 642 gezeigt sind. Der Differenzdrucksensor umfasst eine erste Einzelplatte 202 mit einem linken durchgehenden Loch, das nach unten in eine in der ersten Leiterplatte 202 nach innen verlaufende, nicht durchgehende Nut übergeht. Unterhalb der ersten Einzelplatte 202 ist eine erste Verbindungsschicht 602 angeordnet, die eine an das linke Loch der ersten Einzelplatte 202 und an die Nut der ersten Einzelplatte 202 anschliessende durchgehende Aussparung aufweist. Unterhalb der ersten Verbindungsschicht 602 ist eine zweiten Einzelplatte 212 und eine erste Membrane 402 mit Dehnzonen 422 angeordnet. Die zweite Einzelplatte 212 weist eine durchgehende Öffnung auf, die links des linken Lochs der ersten Einzelplatte 202 beginnt und sich nach rechts erstreckt. Die erste Membrane 402 ist in dieser Öffnung angeordnet. Ein Rand 442 der Membrane 40 weist ein durchgehendes Loch auf, welches an das durchgehende Loch der ersten Einzelplatte 202 anschliesst. Die Nut der ersten Einzelplatte 202 ist so ausgestaltet, dass sie den Rand 442 der Membrane 402 teilweise nach innen überragt.

Unterhalb der zweiten Einzelplatte 212 ist eine zweite Verbindungsschicht 612 angeordnet. Unterhalb der zweiten Verbindungsschicht 612 ist eine dritte Einzelplatte 222 angeordnet, die ein linkes durchgehendes Loch, welches an das linke Loch der zweiten Einzelplatte 212 anschliesst, und eine im Bereich des Rands 442 der Membrane 402 beginnende durchgehende Öffnung umfasst. Die zweite Verbindungsschicht 612 weist eine an die Öffnung der dritten Einzelplatte 222 anschliessende durchgehende Aussparung auf. Unterhalb der dritten Einzelplatte 222 ist eine dritte Verbindungsschicht 622 angeordnet, die eine an das linke Loch sowie die durchgehende Öffnung der dritten Einzelplatte 222 anschliessende durchgehende Aussparungen aufweist. Unterhalb der dritten Verbindungsschicht 622 ist eine vierte Einzelplatte 232 angeordnet, welche ein linkes durchgehendes Loch aufweist, das an das linke Loch der dritten Einzelplatte 222 anschliesst.

Unterhalb der vierten Einzelplatte 232 ist eine identisch wie die dritte Verbindungsschicht 622 ausgestalteten vierte Verbindungsschicht 632 angeordnet, gefolgt von einer identisch wie die dritte Einzelplatte 222 ausgestalteten fünften Einzelplatte 242, gefolgt von einer identisch wie die zweite Verbindungsschicht 612 ausgestalteten fünften Verbindungsschicht 642, gefolgt von einer identisch wie die zweite Einzelplatte 212 ausgestalteten fünften Einzelplatte 252 mit einer identisch wie die erste Membrane 402 ausgestalteten zweiten Membrane 402, gefolgt von einer identisch wie die erste Verbindungsschicht 602 ausgestalteten sechsten Verbindungsschicht 652. Unterhalb der sechsten Verbindungsschicht 652 ist eine siebte Einzelplatte 262 angeordnet, die eine an das linke Loch der sechsten Einzelplatte 252 anschliessende, nicht durchgehende Nut aufweist, die sich nach rechts erstreckt und den Rand 442 der zweiten Membrane 402 nach innen teilweise überragt.

Die linken Löcher der ersten Einzelplatte 202, der ersten Verbindungsschicht 602, der zweiten Einzelplatte 212, der zweiten Verbindungsschicht 612, der dritten Einzelplatte 222, der dritten Verbindungsschicht 622, der vierten Einzelplatte 232, der vierten Verbindungsschicht 632, der fünften Einzelplatte 242, der fünften Verbindungsschicht 642, der sechsten Einzelplatte 252 und der sechsten Verbindungsschicht 652 bilden zusammen mit den Nuten der ersten Einzelplatte 202 und der siebten Einzelplatte 262 einen ersten nach aussen offenen Zuströmkanal 302.

Bei einem erfindungsgemässen Verfahren zur Herstellung eines solchen Differenzdrucksensors 12 werden die Einzelplatten 202, 212, 222, 232, 242, 252, 262, die Membranen 402 und die Verbindungsschichten 602, 612, 622, 632, 642 wie in Fig. 4 gezeigt, angeordnet und ausgestaltet und danach mit Druck und Wärme beaufschlagt, so dass sich die Verbindungsschichten 602, 612, 622, 632, 642 mit ihren jeweils benachbarten Einzelplatten 202, 212, 222, 232, 242, 252, 262 verbinden und so zusammen eine feste Multilayer-Leiterplatte gebildet wird.

Zu den vorbeschriebenen erfindungsgemässen Differenzdrucksensoren sind weitere konstruktive Variationen realisierbar. Hier ausdrücklich erwähnt seien noch:
- Der erfindungsgemässe Differenzdrucksensor kann auch mit einer einzigen oder mit mehr als zwei Membranen und einer dementsprechenden Anzahl Druckkammern ausgestaltet sein.
- Als Membranen sind zahlreiche andere Membranen denkbar, wie beispielsweise gespannte Folien oder metallene Platten.
- Die Beaufschlagung der Membranoberflächen mit Druck kann über die Führung der Zuströmkanäle frei vordefiniert werden und auf die vorgesehenen Anwendung hin optimiert sein. Insbesondere können die Membranoberflächen auch über einzelne Zuströmkanäle mit Druck beaufschlagt werden.
- Die Herstellung der Multilayer-Leiterplatte kann grundsätzlich mit irgendeinem Verfahren zur Herstellung von Multilayer-Leiterplatten ausgeführt werden.
- Die Membranen und die zugehörigen Einzelplatten können so ausgestaltet sein, dass das elastomere Material, welches den Rand der Membrane umgibt, so am Rand der Öffnung der Einzelplatte haftet, dass die Membrane und die Einzelplatte zusammen eine Einheit bilden. Dadurch wird die Handhabung der bestückten Einzelplatten erleichtert, was insbesondere die Stapelung der Einzelplatten und der Verbindungsschichten in einem erfindungsgemässen Verfahren zur Herstellung eines Differenzdrucksensors erleichtert.

## Patentansprüche

1. Differenzdrucksensor (1; 10; 11; 12) mit einem Gehäuse, in welchem mindestens eine Membrane (40; 400; 401; 402) angeordnet ist, die zwei Druckkammern (70, 71, 72, 73; 700, 710, 720, 730; 701, 711, 721, 731) voneinander trennt, **dadurch gekennzeichnet, dass** das Gehäuse durch Einzelplatten (20, 21, 22, 23, 24, 25, 26; 200, 210, 220, 230, 240, 250, 260; 201, 211, 221, 231, 241, 251, 261, 271, 281; 202, 212, 222, 232, 242, 252, 262) einer Multilayer-Leiterplatte gebildet ist.

2. Differenzdrucksensor (1; 10; 11; 12) nach Anspruch 1, **dadurch gekennzeichnet, dass** eine Einzelplatte (21, 22, 24, 25; 210, 220, 240, 250; 211, 221, 231, 251, 261, 271; 212, 222, 242, 252) der Multilayer-Leiterplatte eine durchgehende Öffnung aufweist und dass die Membrane (40; 400; 401; 402) so angeordnet ist, dass sie die Öffnung abdeckt.

3. Differenzdrucksensor (1; 10; 11) nach Anspruch 1 oder 2, **dadurch gekennzeichnet, dass** zwei benachbarte Einzelplatten (21, 22, 24, 25; 210, 220, 240, 250; 211, 221, 231, 251, 261, 271) der Multilayer-Leiterplatte jeweils eine durchgehende Öffnung aufweisen und dass die Membrane (40; 400; 401) so angeordnet ist, dass sie die beiden Öffnungen trennt.

4. Differenzdrucksensor (1; 11; 12) nach Anspruch 2 oder 3, **dadurch gekennzeichnet, dass** die Membrane (40; 401; 402) in einer eine durchgehende Öffnung aufweisenden Einzelplatte (21, 25; 221, 261; 212, 252) angeordnet ist.

5. Differenzdrucksensor (1; 10; 11) nach einem der Ansprüche 1 bis 3, **dadurch gekennzeichnet, dass** die Membrane (40; 400; 401) zwischen benachbarten jeweils eine durchgehende Öffnung aufweisenden Einzelplatten (21, 22, 24, 25; 210, 220, 240, 250; 211, 221, 241, 251) eingeklemmt ist.

6. Differenzdrucksensor (1; 10; 11; 12) nach einem der Ansprüche 1 bis 5, **dadurch gekennzeichnet, dass** eine Einzelplatte (20, 21, 22, 23, 24, 25, 26; 200, 210, 220, 230, 240, 250, 260; 201, 211, 221, 231, 241, 251, 261, 271, 281; 202, 212, 222, 232, 242, 252, 262) der Multilayer-Leiterplatte auf mindestens einer seiner beiden Oberflächen eine Abschirmbeschichtung aufweist.

7. Differenzdrucksensor (1; 10; 11; 12) nach einem der Ansprüche 1 bis 6, **dadurch gekennzeichnet, dass** er zwei zueinander parallel angeordnete Membranen (40; 400; 401; 402) aufweist, zwischen denen mindestens eine Einzelplatte der Multilayer-Leiterplatte angeordnet ist.

8. Differenzdrucksensor (1; 10; 11; 12) nach Anspruch 7, **dadurch gekennzeichnet, dass** er Zuströmkanäle (30, 31; 300, 310; 301, 311; 302) aufweist zum Beaufschlagen der einander zugewandten Seiten der beiden Membranen (40; 400; 401; 402) mit einem ersten Druck und der einander abgewandten Seiten der beiden Membranen (40; 400; 401; 402) mit einem zweiten Druck.

9. Differenzdrucksensor (1; 10; 11; 12) nach einem der Ansprüche 1 bis 8, **dadurch gekennzeichnet, dass** er eine Schaltung zur Bestimmung der Auslenkung der Membrane (40; 400; 401; 402) oder der Membranen (40; 400; 401; 402) aufweist.

10. Differenzdrucksensor (1; 10; 11; 12) nach einem der Ansprüche 1 bis 9, **dadurch gekennzeichnet, dass** die Membrane (40; 400; 401; 402) einen elastischen druckdichten Federbereich aufweist, in dem ein festerer Teller (41; 410; 411) angeordnet ist, und dass der Federbereich aus Elastomermaterial besteht, in das mindestens ein Federarm (43; 430; 431; 432) eingebettet ist.

11. Verfahren zum Herstellen eines Differenzdrucksensors (1; 10; 11; 12) nach einem der Ansprüche 1 bis 10, **dadurch gekennzeichnet, dass** Einzelplatten (20, 21, 22, 23, 24, 25, 26; 200, 210, 220, 230, 240, 250, 260; 201, 211, 221, 231, 241, 251, 261, 271, 281; 202, 212, 222, 232, 242, 252, 262) entsprechend einer gewünschten Gehäuseform des Differenzdrucksensors (1; 10; 11; 12) vorgeformt werden, dass die Einzelplatten (20, 21, 22, 23, 24, 25, 26; 200, 210, 220, 230, 240, 250, 260; 201, 211, 221, 231, 241, 251, 261, 271, 281; 202, 212, 222, 232, 242, 252, 262) dann insgesamt mit mindestens einer Membrane (40; 400; 401; 402) bestückt werden und dass die Einzelplatten (20, 21, 22, 23, 24, 25, 26; 200, 210, 220, 230, 240, 250, 260; 201, 211, 221, 231, 241, 251, 261, 271, 281; 202, 212, 222, 232, 242, 252, 262) danach zu einer Multilayer-Leiterplatte fest verbunden werden.

12. Verfahren nach Anspruch 11, bei welchem Verbindungsschichten (602, 612, 622, 632, 642, 652) entsprechend den vorgeformten Einzelplatten (202, 212, 222, 232, 242, 252, 262) vorgeformt werden, die Einzelplatten (202, 212, 222, 232, 242, 252, 262) und die Verbindungsschichten (602, 612, 622, 632, 642, 652) alternierend aufeinander angeordnet werden und die aufeinander angeordneten Einzelplatten (202, 212, 222, 232, 242, 252, 262) und Verbindungsschichten (602, 612, 622, 632, 642, 652) so mit Druck und Wärme beaufschlagt werden, dass sie zu einer Multilayer-Leiterplatte verbunden werden.
